# EUROPÄISCHE PATENTSCHRIFT

(11) **EP 4 133 931 B1**
(45) Veröffentlichungstag und Bekanntmachung des Hinweises auf die Patenterteilung: **07.05.2025**
(21) Anmeldenummer: 22197796.0
(22) Anmeldetag: 04.07.2018
(51) Int. Cl.: A01D 34/00

(54) **GARTEN- UND/ODER FORSTGERÄTESYSTEM**
GARDEN AND/OR FORESTRY SYSTEM
SYSTÈME D'OUTILLAGE FORESTIER ET/OU DE JARDINAGE

(30) Priorität: 04.07.2017 DE 102017211409
(43) Veröffentlichungstag der Anmeldung: 15.02.2023
(62) Teilanmeldung aus: 18740150.0
(73) Patentinhaber: Andreas Stihl AG & Co. KG, 71336 Waiblingen (DE)
(72) Erfinder: Eberhardt, Maximilian, 73732 Esslingen (DE); Frey, Benjamin, 73663 Berglen (DE); Gerstenberger, Oliver, 71254 Ditzingen (DE); Kurzenberger, Jan, 73257 Köngen (DE)
(74) Vertreter: Patentanwälte Ruff, Wilhelm, Beier, Dauster & Partner mbB

(56) Entgegenhaltungen:
- EP-A1- 3 112 089
- US-A1- 2007 294 991
- US-A1- 2017 020 064
- US-A1- 2017 055 433
- US-B1- 6 408 906

## Beschreibung

### ANWENDUNGSGEBIET UND STAND DER TECHNIK

Die Erfindung bezieht sich auf ein Garten- und/oder Forstgerätesystem.

Garten- und/oder Forstgerätesysteme sind bekannt.

Die US 2007/0294991 A1 offenbart einen hybriden ferngesteuerten Rasenmäher. Der Rasenmäher erlaubt einem Benutzer in einem sicheren Abstand zu dem Rasenmäher an gefährlichen Plätzen, wie z.B. an steilen Hügeln, zu bleiben.

Die EP 3 112 089 A1 offenbart eine Bedienvorrichtung für eine Handwerkzeugmaschine, mit einer Bedienerschnittstelle, welche dazu vorgesehen ist, zumindest eine Bedieneingabe zumindest eines Benutzers zur Steuerung der Handwerkzeugmaschine zu erfassen. Es wird vorgeschlagen, dass die Bedienerschnittstelle dazu vorgesehen ist, die zumindest eine Bedienereingabe kontaktfrei zu erfassen.

Die US 2017/0055433 A1 offenbart Systeme und Verfahren zum Formen grafischer und/oder textlicher Elemente an Land zum entfernten Betrachten.

Die US 2017/0020064 A1 offenbart ein Steuern von Roboter-Rasenmähern.

Die US 6,408,906 B1 offenbart einen Greif- und Schneide-Apparat.

### AUFGABE UND LÖSUNG

Der Erfindung liegt als Aufgabe die Bereitstellung eines Garten- und/oder Forstgerätesystems zugrunde, das verbesserte Eigenschaften aufweist, insbesondere benutzerfreundlich ist.

Die Erfindung löst diese Aufgabe durch die Bereitstellung eines Garten- und/oder Forstsystems mit den Merkmalen des Anspruchs 1. Vorteilhafte Weiterbildungen und/oder Ausgestaltungen der Erfindung sind in den abhängigen Ansprüchen beschrieben.

Das erfindungsgemäße Garten- und/oder Forstgerätesystem weist, insbesondere mindestens, ein handgeführtes Garten- und/oder Forstbearbeitungsgerät und, insbesondere mindestens, eine Assistenzeinrichtung auf. Die Assistenzeinrichtung ist getrennt von dem Garten- und/oder Forstbearbeitungsgerät ausgebildet. Des Weiteren ist die Assistenzeinrichtung dazu ausgebildet, einen Benutzer beim Betrieb des Garten- und/oder Forstbearbeitungsgeräts zu unterstützen, insbesondere automatisch zu unterstützen. Die Assistenzeinrichtung weist eine Benutzerschnittstelle auf, mittels welcher die Assistenzeinrichtung durch Benutzereingaben steuerbar ist. Das Garten- und/oder Forstbearbeitungsgerät weist, insbesondere mindestens, ein benutzerbetätigbares Bedienelement für Benutzereingaben an die Benutzerschnittstelle auf.

Das Garten- und/oder Forstgerätesystem ermöglicht ein Bearbeiten eines Objekts mittels des handgeführten Garten- und/oder Forstbearbeitungsgeräts durch den Benutzer. Dabei kann die Assistenzeinrichtung den Benutzer unterstützen. Mittels des benutzerbetätigbaren Bedienelements kann der Benutzer die Assistenzeinrichtung steuern, insbesondere ohne das Garten- und/oder Forstbearbeitungsgerät aus der Hand lassen, insbesondere legen, zu müssen. Somit braucht der Betrieb des Garten- und/oder Forstbearbeitungsgeräts nicht unterbrochen zu werden.

Handgeführtes Garten- und/oder Forstgerät kann bedeuten, dass das Garten- und/oder Forstgerät eine maximale Masse von 50 Kilogramm (kg), insbesondere von 20 kg, insbesondere von 10 kg, aufweisen kann. Insbesondere kann das Garten- und/oder Forstgerät als ein handgetragenes Garten- und/oder Forstgerät ausgebildet sein.

Getrennt kann bedeuten, dass die Assistenzeinrichtung räumlich getrennt von dem Garten- und/oder Forstbearbeitungsgerät ausgebildet sein kann und/oder nicht an dem Garten- und/oder Forstbearbeitungsgerät angeordnet, insbesondere befestigt, zu sein braucht.

Das benutzerbetätigbare Bedienelement kann insbesondere in dem rauen Umfeld der Garten- und/oder Forstarbeit eine sichere Bedienung beziehungsweise Steuerung gewährleisten.

Das Garten- und/oder Forstbearbeitungsgerät kann ein Antriebsmotorsystem zum Betreiben des Garten- und/oder Forstbearbeitungsgeräts aufweisen. Das Antriebsmotorsystem kann ein Benutzer-Betätigungselement zum Betätigen des Antriebsmotorsystems aufweisen. Das Benutzer-Betätigungselement kann eine von dem benutzerbetätigbaren Bedienelement verschiedene Funktion erfüllen. Insbesondere kann das Benutzer-Betätigungselement verschieden von dem benutzerbetätigbaren Bedienelement sein, insbesondere getrennt von dem benutzerbetätigbaren Bedienelement ausgebildet sein.

In einer Weiterbildung der Erfindung weist das handgeführte Garten- und/oder Forstbearbeitungsgerät eine Säge oder alternativ einen Hoch-Entaster oder einen Freischneider oder eine Heckenschere oder einen Heckenschneider oder ein Blasgerät oder einen Laubbläser oder einen Trennschleifer auf. Die Säge oder der Hoch-Entaster kann jeweils ein Bearbeiten des Objekts in Form eines Baums, insbesondere eines Baumstamms, ermöglichen. Insbesondere kann die Säge eine Motorsäge und/oder eine Kettensäge sein. Der Freischneider kann ein Bearbeiten des Objekts in Form einer Grünfläche, insbesondere einer Wiese mit Rasen, ermöglichen. Die Heckenschere oder der Heckenschneider kann jeweils ein Bearbeiten des Objekts in Form einer Hecke und/oder eines Strauchs beziehungsweise Buschs ermöglichen. Das Blasgerät oder der Laubbläser kann jeweils ein Bearbeiten des Objekts in Form einer Freifläche, insbesondere eines unversiegelten Bodens, insbesondere einer Grünfläche, insbesondere mindestens teilweise bedeckt mit Blättern beziehungsweise Laub, ermöglichen.

Das Garten- und/oder Forstbearbeitungsgerät weist eine Erfassungseinrichtung auf. Die Erfassungseinrichtung ist zum, insbesondere automatischen, Erfassen einer Eigenschaft des Garten- und/oder Forstbearbeitungsgeräts und/oder einer Eigenschaft des mittels des Garten- und/oder Forstbearbeitungsgeräts zu bearbeitenden Objekts ausgebildet. Das Erfassen ist mittels des benutzerbetätigbaren Bedienelements steuerbar. Die Assistenzeinrichtung ist dazu ausgebildet, den Benutzer in Abhängigkeit von der erfassten Eigenschaft zu unterstützen. Die Eigenschaft kann einen Wert und/oder einen Betrag aufweisen oder sein. Die Eigenschaft des Garten- und/oder Forstbearbeitungsgeräts kann eine Orientierung beziehungsweise eine Ausrichtung, insbesondere einen Winkel, eine Position, einen Abstand, einen von einem Betrieb des Antriebsmotorsystems, soweit vorhanden, erzeugten Schall und/oder einen Gerätezustand aufweisen oder sein. Insbesondere kann der Gerätezustand eine Schärfe eines Werkzeugs des Garten- und/oder Forstbearbeitungsgeräts und/oder einen Füllstand aufweisen oder sein, insbesondere einen Kraftstoff- und/oder Ölfüllstand. Basierend auf der Orientierung und/oder der Position kann ein Rückschlag des Garten- und/oder Forstbearbeitungsgeräts erfasst werden. Die Eigenschaft des Objekts kann, insbesondere mindestens, eine Orientierung, insbesondere mindestens, eine Position und/oder, insbesondere mindestens, einen Abstand, insbesondere eine Länge, und/oder, insbesondere mindestens, eine Fläche und/oder, insbesondere mindestens, eine Form aufweisen oder sein. Insbesondere kann mittels des benutzerbetätigbaren Bedienelements gesteuert sein, in welcher Betriebssituation beziehungsweise Bearbeitungssituation das Garten- und/oder Forstbearbeitungsgerät sein kann. Im Fall der Säge kann die Situation ein Fällen, ein Entasten oder ein Durchtrennen beziehungsweise Ablängen des Baums sein. Im Fall des Durchtrennens kann basierend auf der Ausrichtung des Garten- und/oder Forstbearbeitungsgeräts die Orientierung des Objekts erfasst werden.

Die Erfassungseinrichtung weist eine Kamera und/oder eine inertiale Messeinheit auf. Insbesondere kann die Erfassungseinrichtung eine Wasserwaage und/oder einen Kompass und/oder ein lokales Positionsbestimmungsgerät und/oder ein Satelliten-Positionsbestimmungsgerät und/oder einen Schallwandler und/oder einen Entfernungsmesser und/oder einen Drehzahlmesser und/oder ein Thermometer und/oder einen Gerätebetriebssensor aufweisen. Die Kamera kann eine Stereokamera und/oder eine TOF-Kamera für Tiefeninformation aufweisen. TOF-Kameras sind 3D-Kamerasysteme, die mit dem Laufzeitverfahren (Englisch: time of flight) Distanzen messen können. Die inertiale Messeinheit kann mindestens einen Beschleunigungssensor und/oder mindestens einen Drehratensensor aufweisen. Das Garten- und/oder Forstbearbeitungsgerät weist die inertiale Messeinheit auf. Die Wasserwaage kann als eine elektrische beziehungsweise digitale Wasserwaage ausgebildet sein. Insbesondere kann das Garten- und/oder Forstbearbeitungsgerät die Wasserwaage aufweisen. Der Kompass kann als ein elektrischer oder digitaler Kompass ausgebildet sein. Insbesondere kann das Garten- und/oder Forstbearbeitungsgerät den Kompass aufweisen. Vorteilhafterweise kann das lokale Positionierungssystemgerät auf einer oder mehreren verschiedenen Technologien basieren wie Abstandsmessungen zu Knotenpunkten, optischen Signalen, Radiowellen, magnetischen Feldern, akustischen Signalen, Ultrabreitband, Bluetooth, WLAN, Ultraschall und/oder RFID. Das Satelliten-Positionsbestimmungsgerät kann für eines oder mehrere Satelliten-Positionsbestimmungssysteme wie NAVSTAR GPS, GLONASS, Galileo und/oder BeiDou ausgebildet sein. Zusätzlich oder alternativ kann das Satelliten-Positionsbestimmungsgerät als ein RTK-Satelliten-Positionsbestimmungsgerät (Englisch: real time kinematic) und/oder als ein differentielles Satelliten-Positionsbestimmungsgerät ausgebildet sein. Der Schallwandler kann ein Mikrophon aufweisen oder sein. Der Entfernungsmesser kann als ein Funkdistanzmesser oder ein Laserdistanzmesser ausgebildet sein. Insbesondere kann das Garten- und/oder Forstbearbeitungsgerät den Drehzahlmesser und/oder das Thermometer und/oder den Gerätebetriebssensor aufweisen.

In einer Weiterbildung der Erfindung weist das Garten- und/oder Forstgerätesystem eine Ausgabeeinrichtung auf. Die Ausgabeeinrichtung ist zum, insbesondere automatischen, Ausgeben einer Assistenzinformation an den Benutzer ausgebildet. Die Assistenzinformation kann die Eigenschaft des Garten- und/oder Forstbearbeitungsgeräts und/oder die Eigenschaft des Objekts aufweisen sein. Zusätzlich oder alternativ kann die Assistenzinformation auf der Eigenschaft basieren. Weiter zusätzlich oder alternativ kann die Assistenzinformation einen Hinweis für den Benutzer zum Erreichen der Eigenschaft, die insbesondere vorgegeben sein kann, und/oder zum Ändern der Eigenschaft aufweisen oder sein. Insbesondere kann das Garten- und/oder Forstbearbeitungsgerät oder die Assistenzeinrichtung die Ausgabeeinrichtung aufweisen.

In einer Ausgestaltung der Erfindung weist die Ausgabeeinrichtung eine Anzeige und/oder einen Schallerzeuger und/oder eine Vibrationseinrichtung auf. Die Anzeige kann eine LED, insbesondere eine OLED, oder ein Display, insbesondere ein LCD-Display, aufweisen oder sein. Insbesondere kann die Anzeige dazu ausgebildet sein, die Assistenzinformation in einem Sichtfeld des Benutzers, insbesondere vor dem zu bearbeitenden Objekt, soweit vorhanden, anzuzeigen und/oder in dieses zu projizieren oder einzublenden, insbesondere beim Betrieb des Garten- und/oder Forstbearbeitungsgeräts. Die Anzeige kann auf Englisch als Head-up-Display bezeichnet werden. Dies kann auf Englisch als Virtual Reality und/oder als Augmented Reality bezeichnet werden. Der Schallerzeuger kann einen Lautsprecher aufweisen oder sein.

In einer Ausgestaltung der Erfindung weist das Garten- und/oder Forstgerätesystem einen Schutzhelm, einen Gesichts- und/oder Gehörschutz, eine Schutzbrille, einen Schutzhandschuh, eine Smartwatch, ein Armband, einen Armreif und/oder ein Smartphone auf, an welchem/welcher die Ausgabeeinrichtung angeordnet ist, insbesondere integriert sind/ist. Dies ermöglicht ein Tragen der Ausgabeeinrichtung am Körper des Benutzers. Insbesondere kann die Anzeige, soweit vorhanden, dazu ausgebildet sein, die Assistenzinformation auf einem Visier des Schutzhelms, des Gesichts- und/oder Gehörschutz und/oder der Schutzbrille, soweit vorhanden, anzuzeigen oder in dieses zu projizieren. Die Anzeige kann auf Englisch als Headmounted-Display bezeichnet werden.

In einer Weiterbildung der Erfindung weist das benutzerbetätigbare Bedienelement einen Dreh- und/oder Drücksteller und/oder ein Touchpad auf.

Das handgeführte Garten- und/oder Forstbearbeitungsgerät weist einen Handgriff auf. Das benutzerbetätigbare Bedienelement ist im Bereich des Handgriffs angeordnet. Im Bereich des Handgriffs kann bedeuten, in Fingerreichweite von dem Handgriff, insbesondere maximal 10 Zentimeter (cm), insbesondere maximal 5 cm, insbesondere maximal 2 cm entfernt. Insbesondere kann das benutzerbetätigbare Bedienelement am Handgriff angeordnet sein.

In einer Weiterbildung der Erfindung sind die Benutzerschnittstelle und das benutzerbetätigbare Bedienelement dazu ausgebildet, kabellos beziehungsweise drahtlos miteinander wechselzuwirken beziehungsweise zusammenzuwirken, insbesondere mittels Funk.

In einer Weiterbildung der Erfindung weist die Assistenzeinrichtung verschiedene Assistenzfunktionen beziehungsweise Assistenzmodi, insbesondere jeweils, zum, insbesondere automatischen, Unterstützen des Benutzers beim Betrieb des Garten- und/oder Forstbearbeitungsgeräts auf. Zusätzlich oder alternativ weist das Garten- und/oder Forstgerätesystem verschiedene Assistenzeinrichtungen aufweisend verschiedene Assistenzfunktionen beziehungsweise Assistenzmodi, insbesondere jeweils, zum, insbesondere automatischen, Unterstützen des Benutzers beim Betrieb des Garten- und/oder Forstbearbeitungsgeräts auf. Des Weiteren ist das benutzerbetätigbare Bedienelement zum Auswählen einer, insbesondere oder mehrerer und/oder jeder, der Assistenzfunktionen, insbesondere durch den Benutzer, ausgebildet. Zusätzlich oder alternativ weist das Garten- und/oder Forstbearbeitungsgerät verschiedene benutzerbetätigbare Bedienelemente, insbesondere jeweils, ausgebildet zum Auswählen einer, insbesondere oder mehrerer und/oder jeder, der Assistenzfunktionen, insbesondere durch den Benutzer, auf.

Insbesondere können die Assistenzeinrichtungen, insbesondere jeweils, getrennt von dem Garten- und/oder Forstbearbeitungsgerät ausgebildet sein. Zusätzlich oder alternativ können die Assistenzeinrichtungen, insbesondere jeweils, dazu ausgebildet, den Benutzer beim Betrieb des Garten- und/oder Forstbearbeitungsgeräts zu unterstützen, insbesondere automatisch zu unterstützen. Weiter zusätzlich oder alternativ können die Assistenzeinrichtungen, insbesondere jeweils, eine Benutzerschnittstelle aufweisen, mittels welcher die, insbesondere jeweilige, Assistenzeinrichtung durch Benutzereingaben steuerbar sein kann. Weiter zusätzlich oder alternativ können die benutzerbetätigbaren Bedienelemente, insbesondere jeweils, für Benutzereingaben an die, insbesondere jeweilige, Benutzerschnittstelle/n ausgebildet sein. Weiter zusätzlich oder alternativ können die benutzerbetätigbaren Bedienelemente, insbesondere jeweils, den Assistenzeinrichtungen, soweit vorhanden, und/oder den Assistenzfunktionen zugeordnet sein. Insbesondere kann ein erstes benutzerbetätigbares Bedienelement der benutzerbetätigbaren Bedienelemente zum Auswählen einer ersten Assistenzfunktion der Assistenzfunktionen ausgebildet sein und ein von dem ersten verschiedenes, zweites benutzerbetätigbares Bedienelement der benutzerbetätigbaren Bedienelemente kann zum Auswählen einer von der ersten verschiedenen, zweiten Assistenzfunktion der Assistenzfunktionen ausgebildet sein. Weiter zusätzlich oder alternativ können die benutzerbetätigbaren Bedienelemente, insbesondere jeweils, getrennt voneinander ausgebildet sein. Weiter zusätzlich oder alternativ können die Assistenzeinrichtungen, insbesondere jeweils, getrennt voneinander ausgebildet sein. Weiter zusätzlich oder alternativ kann jede der Assistenzeinrichtungen, insbesondere mindestens, eine der Assistenzfunktionen aufweisen. Weiter zusätzlichen kann das Auswählen einer, insbesondere oder mehrerer, der Assistenzfunktionen von einem Betätigen beziehungsweise Auslösen beziehungsweise Triggern innerhalb einer ausgewählten Assistenzfunktion verschieden sein. Weiter zusätzlich oder alternativ kann eine, insbesondere oder mehrere, der Assistenzfunktionen mehrere, insbesondere verschiedene, Unter-Assistenzfunktionen aufweisen. Das/die benutzerbetätigbare/n Bedienelemente kann/können zum Auswählen der Unter-Assistenzfunktionen ausgebildet sein.

In einer Ausgestaltung der Erfindung weisen die verschiedenen Assistenzfunktionen eine Gerätefunktion, eine Objektfunktion, eine Erfassungsfunktion beziehungsweise Messfunktion, eine Betriebsfunktion beziehungsweise Bearbeitungsfunktion, eine Dokumentationsfunktion, eine Auswertungsfunktion, eine Abrechnungsfunktion beziehungsweise Kostenfunktion, eine Aufzeichnungsfunktion, eine Ausgabefunktion, eine Informationsfunktion, eine Übertragungsfunktion beziehungsweise Weitergabefunktion, eine Benutzerfunktion und/oder eine Hilfsfunktion auf.

Insbesondere kann die Gerätefunktion eine Assistenzfunktion bezüglich beziehungsweise in Abhängigkeit beziehungsweise basierend auf einer, insbesondere der, insbesondere erfassten, Eigenschaft des Garten- und/oder Forstbearbeitungsgeräts aufweisen oder sein. Insbesondere kann die Gerätefunktion mehrere, insbesondere verschiedene, Unter-Assistenzfunktionen bezüglich mehrerer, insbesondere verschiedener, Eigenschaften des Garten- und/oder Forstbearbeitungsgeräts aufweisen. Zusätzlich oder alternativ kann die Objektfunktion eine Assistenzfunktion bezüglich beziehungsweise in Abhängigkeit beziehungsweise basierend auf einer, insbesondere der, insbesondere erfassten, einer Eigenschaft des Objekts aufweisen oder sein. Insbesondere kann die Objektfunktion mehrere, insbesondere verschiedene, Unter-Assistenzfunktionen bezüglich mehrerer, insbesondere verschiedener, Eigenschaften des Objekts aufweisen. Weiter zusätzlich oder alternativ kann die Erfassungsfunktion eine Assistenzfunktion bezüglich beziehungsweise in Abhängigkeit beziehungsweise basierend auf einer Eigenschaft der Erfassungseinrichtung, soweit vorhanden, und/oder einer, insbesondere der, insbesondere zu erfassenden, Eigenschaft des Garten- und/oder Forstbearbeitungsgeräts und/oder des Objekts aufweisen oder sein. Insbesondere kann die Erfassungsfunktion mehrere, insbesondere verschiedene, Unter-Assistenzfunktionen bezüglich mehrerer, insbesondere verschiedener, Eigenschaften der Erfassungseinrichtung und/oder mehrerer, insbesondere verschiedener, insbesondere zu erfassender, Eigenschaften des Garten- und/oder Forstbearbeitungsgeräts und/oder des Objekts aufweisen. Weiter zusätzlich oder alternativ kann die Betriebsfunktion eine Assistenzfunktion bezüglich beziehungsweise in Abhängigkeit beziehungsweise basierend auf einer Betriebssituation beziehungsweise Bearbeitungssituation, insbesondere des Garten- und/oder Forstbearbeitungsgeräts, aufweisen oder sein. Insbesondere kann die Betriebsfunktion mehrere, insbesondere verschiedene, Unter-Assistenzfunktionen bezüglich mehrerer, insbesondere verschiedener, Betriebssituationen beziehungsweise Bearbeitungssituationen, insbesondere des Garten- und/oder Forstbearbeitungsgeräts, aufweisen, insbesondere einer Erfassungs-Assistenzfunktion, eine Fäll-Assistenzfunktion, eine Entast-Assistenzfunktion und/oder ein Durchtrenn-Assistenzfunktion. Weiter zusätzlich oder alternativ kann die Dokumentationsfunktion eine Unterstützung eines weiteren Betriebs, insbesondere eines weiteren Betriebsschritts, insbesondere mittels des Garten- und/oder Forstbearbeitungsgeräts, beziehungsweise einer weiteren Bearbeitung, insbesondere eines weiteren Bearbeitungsschritts, insbesondere des Objekts, ermöglichen oder bereitstellen. Weiter zusätzlich oder alternativ kann die Auswertungsfunktion eine Auswertung einer, insbesondere der, insbesondere erfassten, Eigenschaft des Garten- und/oder Forstbearbeitungsgeräts und/oder des Objekts ermöglichen oder bereitstellen. Weiter zusätzlich oder alternativ kann die Abrechnungsfunktion eine Abrechnung bezüglich beziehungsweise in Abhängigkeit beziehungsweise basierend auf einer, insbesondere der, insbesondere erfassten, Eigenschaft des Garten- und/oder Forstbearbeitungsgeräts und/oder des Objekts ermöglichen oder bereitstellen. Weiter zusätzlich oder alternativ kann die Aufzeichnungsfunktion eine Aufzeichnung bezüglich beziehungsweise in Abhängigkeit beziehungsweise basierend auf einer, insbesondere der, insbesondere erfassten, Eigenschaft des Garten- und/oder Forstbearbeitungsgeräts und/oder des Objekts ermöglichen oder bereitstellen. Weiter zusätzlich oder alternativ kann die Ausgabefunktion eine Assistenzfunktion bezüglich beziehungsweise in Abhängigkeit beziehungsweise basierend auf einer Eigenschaft der Ausgabeeinrichtung, soweit vorhanden, aufweisen oder sein. Insbesondere kann die Ausgabefunktion mehrere, insbesondere verschiedene, Unter-Assistenzfunktionen bezüglich mehrerer, insbesondere verschiedener, Eigenschaften der Ausgabeeinrichtung aufweisen, insbesondere eine Anzeigefunktion, eine Schallerzeugerfunktion und/oder eine Vibrationseinrichtungsfunktion. Weiter zusätzlich oder alternativ kann die Informationsfunktion eine Assistenzfunktion bezüglich beziehungsweise in Abhängigkeit beziehungsweise basierend auf der Assistenzinformation, soweit vorhanden, aufweisen oder sein. Weiter zusätzlich oder alternativ kann die Übertragungsfunktion eine Übertragung bezüglich beziehungsweise in Abhängigkeit beziehungsweise basierend auf einer, insbesondere der, insbesondere erfassten, Eigenschaft des Garten- und/oder Forstbearbeitungsgeräts und/oder des Objekts ermöglichen oder bereitstellen. Weiter zusätzlich oder alternativ kann die Benutzerfunktion als Komfortfunktion bezeichnet werden. Weiter zusätzlich oder alternativ kann die Hilfsfunktion eine Hilfe des Benutzers ermöglichen oder bereitstellen.

In einer Ausgestaltung weist die Assistenzinformation, soweit vorhanden, eine Geräteinformation, eine Objektinformation, eine Erfassungsinformation beziehungsweise Messinformation, eine Betriebsinformation beziehungsweise Bearbeitungsinformation, eine Dokumentationsinformation, eine Auswertungsinformation, eine Abrechnungsinformation beziehungsweise Kosteninformation, eine Aufzeichnungsinformation, eine Ausgabeinformation, eine Übertragungsinformation beziehungsweise Weitergabeinformation, eine Benutzerinformation und/oder eine Hilfsinformation auf.

Insbesondere kann die Geräteinformation eine Assistenzinformation bezüglich beziehungsweise in Abhängigkeit beziehungsweise basierend auf einer, insbesondere der, insbesondere erfassten, Eigenschaft des Garten- und/oder Forstbearbeitungsgeräts aufweisen oder sein. Zusätzlich oder alternativ kann die Objektinformation eine Assistenzinformation bezüglich beziehungsweise in Abhängigkeit beziehungsweise basierend auf einer, insbesondere der, insbesondere erfassten, Eigenschaft des Objekts aufweisen oder sein. Weiter zusätzlich oder alternativ kann die Erfassungsinformation eine Assistenzinformation bezüglich beziehungsweise in Abhängigkeit beziehungsweise basierend auf einer Eigenschaft der Erfassungseinrichtung, soweit vorhanden, und/oder einer, insbesondere der, insbesondere zu erfassenden, Eigenschaft des Garten- und/oder Forstbearbeitungsgeräts und/oder des Objekts aufweisen oder sein. Weiter zusätzlich oder alternativ kann die Betriebsinformation eine Assistenzinformation bezüglich beziehungsweise in Abhängigkeit beziehungsweise basierend auf einer Betriebssituation beziehungsweise Bearbeitungssituation, insbesondere des Garten- und/oder Forstbearbeitungsgeräts, aufweisen oder sein. Insbesondere kann die Betriebsinformation mehrere, insbesondere verschiedene, Unter-Assistenzinformationen bezüglich mehrerer, insbesondere verschiedener, Betriebssituationen beziehungsweise Bearbeitungssituationen, insbesondere des Garten- und/oder Forstbearbeitungsgeräts, aufweisen, insbesondere eine Fäll-Assistenzinformation, eine Entast-Assistenzinformation und/oder ein Durchtrenn-Assistenzinformation. Weiter zusätzlich oder alternativ kann die Dokumentationsinformation eine Assistenzinformation bezüglich beziehungsweise in Abhängigkeit beziehungsweise basierend auf einer Unterstützung eines weiteren Betriebs, insbesondere eines weiteren Betriebsschritts, insbesondere mittels des Garten- und/oder Forstbearbeitungsgeräts, beziehungsweise einer weiteren Bearbeitung, insbesondere eines weiteren Bearbeitungsschritts, insbesondere des Objekts, aufweisen oder sein. Weiter zusätzlich oder alternativ kann die Auswertungsinformation eine Assistenzinformation bezüglich beziehungsweise in Abhängigkeit beziehungsweise basierend auf einer Auswertung einer, insbesondere der, insbesondere erfassten, Eigenschaft des Garten- und/oder Forstbearbeitungsgeräts und/oder des Objektsaufweisen oder sein. Weiter zusätzlich oder alternativ kann die Abrechnungsinformation eine Assistenzinformation bezüglich beziehungsweise in Abhängigkeit beziehungsweise basierend auf einer Abrechnung bezüglich beziehungsweise in Abhängigkeit beziehungsweise basierend auf einer, insbesondere der, insbesondere erfassten, Eigenschaft des Garten- und/oder Forstbearbeitungsgeräts und/oder des Objekts aufweisen oder sein. Weiter zusätzlich oder alternativ kann die Aufzeichnungsinformation eine Assistenzinformation bezüglich beziehungsweise in Abhängigkeit beziehungsweise basierend auf einer Aufzeichnung bezüglich beziehungsweise in Abhängigkeit beziehungsweise basierend auf einer, insbesondere der, insbesondere erfassten, Eigenschaft des Garten- und/oder Forstbearbeitungsgeräts und/oder des Objekts aufweisen oder sein. Weiter zusätzlich oder alternativ kann die Ausgabeinformation eine Assistenzinformation bezüglich beziehungsweise in Abhängigkeit beziehungsweise basierend auf einer Eigenschaft der Ausgabeeinrichtung, soweit vorhanden, aufweisen oder sein. Insbesondere kann die Ausgabeinformation mehrere, insbesondere verschiedene, Unter-Assistenzinformationen bezüglich mehrerer, insbesondere verschiedener, Eigenschaften der Ausgabeeinrichtung aufweisen, insbesondere eine Anzeigeinformation, eine Schallerzeugerinformation und/oder eine Vibrationseinrichtungsinformation. Weiter zusätzlich oder alternativ kann die Übertragungsinformation eine Assistenzinformation bezüglich beziehungsweise in Abhängigkeit beziehungsweise basierend auf einer Übertragung bezüglich beziehungsweise in Abhängigkeit beziehungsweise basierend auf einer, insbesondere der, insbesondere erfassten, Eigenschaft des Garten- und/oder Forstbearbeitungsgeräts und/oder des Objekts aufweisen oder sein. Weiter zusätzlich oder alternativ kann die Benutzerinformation als Komfortinformation bezeichnet werden. Weiter zusätzlich oder alternativ kann die Hilfsinformation eine Assistenzinformation bezüglich beziehungsweise in Abhängigkeit beziehungsweise basierend auf einer Hilfe des Benutzers aufweisen oder sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Garten- und/oder Forstgerätesystems,
- Fig. 2: eine Rückseitenansicht eines handgeführten Garten- und/oder Forstbearbeitungsgeräts des Garten- und/oder Forstgerätesystems der Fig. 1,
- Fig. 3: eine weitere Perspektivansicht des Garten- und/oder Forstgerätesystems der Fig. 1 im Betrieb,
- Fig. 4: verschiedene Assistenzfunktionen des Garten- und/oder Forstgerätesystems der Fig. 1, und
- Fig. 5: verschiedene Assistenzinformationen des Garten- und/oder Forstgerätesystems der Fig. 1.

### DETAILLIERTE BESCHREIBUNG DER AUSFÜHRUNGSBEISPIELE

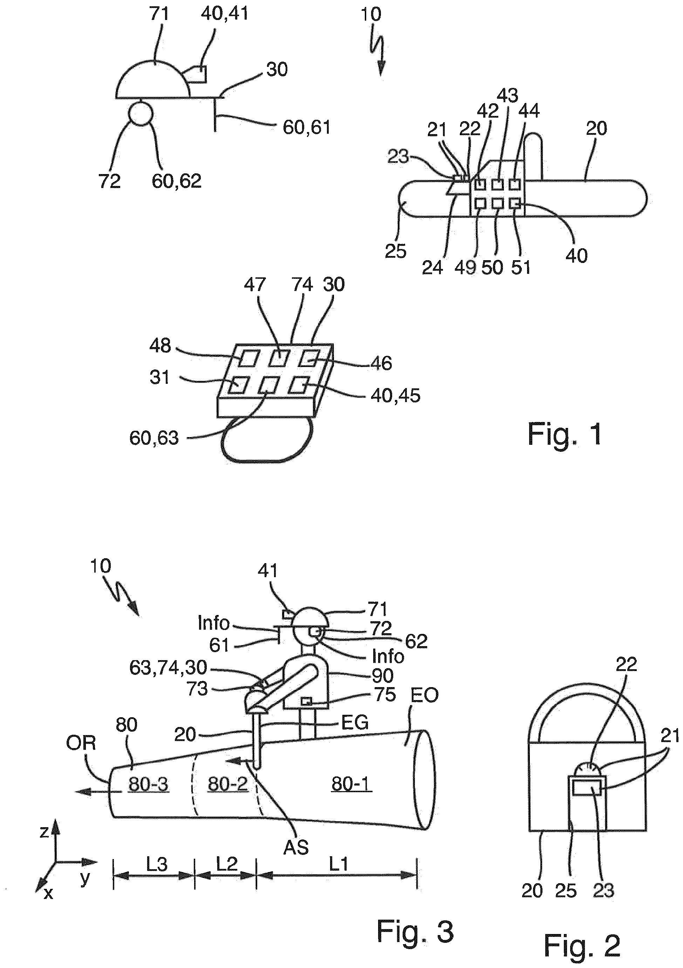

Fig. 1 bis 3 zeigen ein erfindungsgemäßes Garten- und/oder Forstgerätesystem 10. Das Garten- und/oder Forstgerätesystem 10 weist ein handgeführtes Garten- und/oder Forstbearbeitungsgerät 20 und eine Assistenzeinrichtung 30 auf. Die Assistenzeinrichtung 30 ist getrennt von dem Garten- und/oder Forstbearbeitungsgerät 20 ausgebildet. Des Weiteren ist die Assistenzeinrichtung 30 dazu ausgebildet, einen Benutzer 90 beim Betrieb des Garten- und/oder Forstbearbeitungsgeräts 20 zu unterstützen. Die Assistenzeinrichtung 30 weist eine Benutzerschnittstelle 31 auf, mittels welcher die Assistenzeinrichtung 30 durch Benutzereingaben steuerbar ist. Das Garten- und/oder Forstbearbeitungsgerät 20 weist ein benutzerbetätigbares Bedienelement 21 für Benutzereingaben an die Benutzerschnittstelle 31 auf.

Im gezeigten Ausführungsbeispiel ist das handgeführte Garten- und/oder Forstbearbeitungsgerät 20 eine Säge, insbesondere eine motorangetriebene Kettensäge. In alternativen Ausführungsbeispielen kann das Garten- und/oder Forstbearbeitungsgerät einen Hoch-Entaster oder einen Freischneider oder eine Heckenschere oder einen Heckenschneider oder ein Blasgerät oder einen Laubbläser oder einen Trennschleifer aufweisen oder sein. Im Detail weist das Garten- und/oder Forstbearbeitungsgerät 20 ein Benutzer-Betätigungselement 24 in Form einer Taste zum Betreiben beziehungsweise Betätigen des Garten- und/oder Forstbearbeitungsgeräts 20 auf.

Des Weiteren weist das handgeführte Garten- und/oder Forstbearbeitungsgerät 20 einen Handgriff 25 auf. Das benutzerbetätigbare Bedienelement 21 ist im Bereich des Handgriffs 25 angeordnet, insbesondere am Handgriff 25.

Im Detail weist das benutzerbetätigbare Bedienelement 21 einen Dreh- und/oder Drücksteller 22 und ein Touchpad 23 auf. In alternativen Ausführungsbeispielen kann das benutzerbetätigbare Bedienelement entweder den Drehsteller oder den Drücksteller oder das Touchpad aufweisen.

Außerdem sind die Benutzerschnittstelle 31 und das benutzerbetätigbare Bedienelement 21 dazu ausgebildet, kabellos miteinander wechselzuwirken.

Weiter weist das Garten- und/oder Forstgerätesystem 10 eine Erfassungseinrichtung 40 auf. Die Erfassungseinrichtung 40 ist zum Erfassen einer Eigenschaft EG des Garten- und/oder Forstbearbeitungsgeräts 20 und einer Eigenschaft EO des mittels des Garten- und/oder Forstbearbeitungsgeräts 20 zu bearbeitenden Objekts 80 ausgebildet. In alternativen Ausführungsbeispielen kann die Erfassungseinrichtung zum Erfassen entweder der Eigenschaft des Garten- und/oder Forstbearbeitungsgeräts oder der Eigenschaft Objekts ausgebildet sein. Das Erfassen ist mittels des benutzerbetätigbaren Bedienelements 21 steuerbar. Die Assistenzeinrichtung 30 ist dazu ausgebildet, den Benutzer 90 in Abhängigkeit von der erfassten Eigenschaft EG, EO zu unterstützen. Im gezeigten Ausführungsbeispiel ist die Eigenschaft EG des Garten- und/oder Forstbearbeitungsgeräts 20 eine Ausrichtung AS. Die Eigenschaft EO des Objekts 80 ist eine Position und eine Länge.

Im Detail weist die Erfassungseinrichtung eine Kamera 41, eine inertiale Messeinheit 42, eine Wasserwaage 43, einen Kompass 44, ein lokales Positionsbestimmungsgerät 45, ein Satelliten-Positionsbestimmungsgerät 46, einen Schallwandler 47, einen Entfernungsmesser 48, einen Drehzahlmesser 49, ein Thermometer 50 und einen Gerätebetriebssensor 51 auf. In alternativen Ausführungsbeispielen kann die Erfassungseinrichtung entweder die Kamera oder die inertiale Messeinheit oder die Wasserwaage oder den Kompass oder das lokale Positionsbestimmungsgerät oder das Satelliten-Positionsbestimmungsgerät oder den Schallwandler oder den Entfernungsmesser oder den Drehzahlmesser oder das Thermometer oder den Gerätebetriebssensor aufweisen. Im gezeigten Ausführungsbeispiel weist das Garten- und/oder Forstbearbeitungsgerät 20 die inertiale Messeinheit 42, die Wasserwaage 43, den Kompass 44, den Drehzahlmesser 49, das Thermometer 50 und den Gerätebetriebssensor 51 auf. Die Assistenzeinrichtung 30 weist die Kamera 41, das lokale Positionsbestimmungsgerät 45, das Satelliten-Positionsbestimmungsgerät 46, den Schallwandler 47 und den Entfernungsmesser 48 auf.

Zudem weist Garten- und/oder Forstgerätesystem 10 eine Ausgabeeinrichtung 60 auf. Die Ausgabeeinrichtung 60 ist zum Ausgeben einer Assistenzinformation Info an den Benutzer 90 ausgebildet.

Im Detail weist die Ausgabeeinrichtung 60 eine Anzeige 61 und einen Schallerzeuger 62 und eine Vibrationseinrichtung 63 auf. In alternativen Ausführungsbeispielen kann die Ausgabeeinrichtung entweder die Anzeige oder den Schallerzeuger oder die Vibrationseinrichtung aufweisen. Im gezeigten Ausführungsbeispiel weist die Assistenzeinrichtung 30 die Anzeige 61, den Schallerzeuger 62 und die Vibrationseinrichtung 63 auf.

Des Weiteren weist das Garten- und/oder Forstgerätesystem 10 einen Schutzhelm 71, einen Gesichts- und/oder Gehörschutz 72, einen Schutzhandschuh 73, eine Smartwatch 74 und ein Smartphone 75 auf, an welchem/welcher die Erfassungseinrichtung 40 und/oder die Ausgabeeinrichtung 60 angeordnet sind/ist. In alternativen Ausführungsbeispielen kann das Garten- und/oder Forstgerätesystem entweder den Schutzhelm oder den Gesichts- und/oder Gehörschutz oder den Schutzhandschuh oder die Smartwatch oder das Smartphone aufweisen, an welchem/welcher die Erfassungseinrichtung und/oder die Ausgabeeinrichtung angeordnet sein können/kann. Weiter kann in alternativen Ausführungsbeispielen das Garten- und/oder Forstgerätesystem eine Schutzbrille, ein Armband und/oder einen Armreif aufweisen, an welchem/welcher die Erfassungseinrichtung und/oder die Ausgabeeinrichtung angeordnet sein können/kann.

Im gezeigten Ausführungsbeispiel ist am Schutzhelm 71 die Kamera 41 angeordnet. Des Weiteren ist am Schutzhelm 71 die Anzeige 61 angeordnet.

Am Gesichts- und/oder Gehörschutz 72 ist der Schallerzeuger 62 in Form eines Lautsprechers angeordnet.

An der Smartwatch 74 sind das lokale Positionsbestimmungsgerät 45, das Satelliten-Positionsbestimmungsgerät 46, der Schallwandler 47 und der Entfernungsmesser 48 angeordnet. Des Weiteren ist an der Smartwatch 74 die Vibrationseinrichtung 63 angeordnet.

Im gezeigten Ausführungsbeispiel trägt der Benutzer 90 den Schutzhelm 71 und den Gesichts- und/oder Gehörschutz 72 auf seinem Kopf und die Smartwatch 74 an seinem, insbesondere rechten, Arm, wie in Fig. 3 zu erkennen.

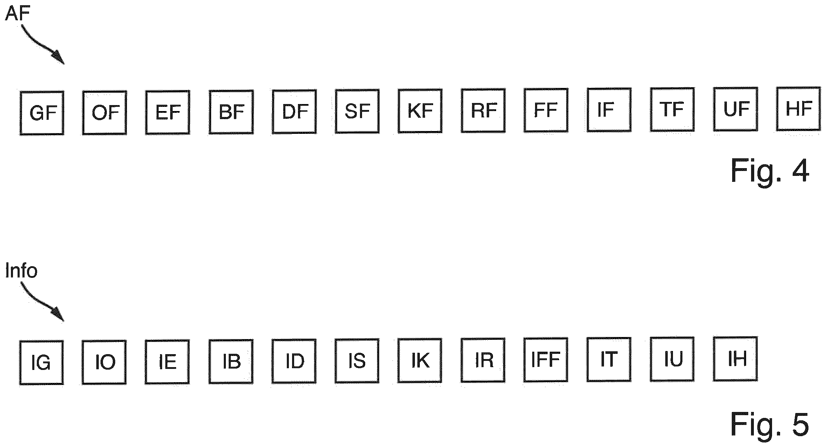

Außerdem weist die Assistenzeinrichtung 30 verschiedene Assistenzfunktionen AF zum Unterstützen des Benutzers 90 beim Betrieb des Garten- und/oder Forstbearbeitungsgeräts 20 auf, wie in Fig. 4 zu erkennen. In alternativen Ausführungsbeispiel kann das Garten- und/oder Forstgerätesystem verschiedene Assistenzeinrichtungen aufweisend verschiedene Assistenzfunktionen zum Unterstützen des Benutzers beim Betrieb des Garten- und/oder Forstbearbeitungsgeräts aufweisen. Des Weiteren ist das benutzerbetätigbare Bedienelement 21 zum Auswählen einer der Assistenzfunktionen AF ausgebildet. In alternativen Ausführungsbeispielen kann das Garten- und/oder Forstbearbeitungsgerät verschiedene benutzerbetätigbare Bedienelemente ausgebildet zum Auswählen einer der Assistenzfunktionen aufweisen.

Im gezeigten Ausführungsbeispiel weisen die verschiedenen Assistenzfunktionen AF eine Gerätefunktion GF, eine Objektfunktion OF, eine Erfassungsfunktion EF, eine Betriebsfunktion BF, eine Dokumentationsfunktion DF, eine Auswertungsfunktion SF, eine Abrechnungsfunktion KF, eine Aufzeichnungsfunktion RF, eine Ausgabefunktion FF, eine Informationsfunktion IF, eine Übertragungsfunktion TF, eine Benutzerfunktion UF und eine Hilfsfunktion HF auf. In alternativen Ausführungsbeispielen können die verschiedenen Assistenzfunktionen die Gerätefunktion, die Objektfunktion, die Erfassungsfunktion, die Betriebsfunktion, die Dokumentationsfunktion, die Auswertungsfunktion, die Abrechnungsfunktion, die Aufzeichnungsfunktion, die Ausgabefunktion, die Informationsfunktion, die Übertragungsfunktion, die Benutzerfunktion und/oder die Hilfsfunktion aufweisen.

Weiter weist im gezeigten Ausführungsbeispiel die Assistenzinformation Info eine Geräteinformation IG, eine Objektinformation IO, eine Erfassungsinformation IE, eine Betriebsinformation IB, eine Dokumentationsinformation ID, eine Auswertungsinformation IS, eine Abrechnungsinformation IK, eine Aufzeichnungsinformation IR, eine Ausgabeinformation IFF, eine Übertragungsinformation IT, eine Benutzerinformation IU und eine Hilfsinformation IH auf, wie in Fig. 5 zu erkennen. In alternativen Ausführungsbeispielen kann die Assistenzinformation die Geräteinformation, die Objektinformation, die Erfassungsinformation, die Betriebsinformation, die Dokumentationsinformation, die Auswertungsinformation, die Abrechnungsinformation, die Aufzeichnungsinformation, die Ausgabeinformation, die Übertragungsinformation, die Benutzerinformation und/oder die Hilfsinformation aufweisen.

Der Benutzer 90 soll das Objekt 80 in Form eines gefällten Baumstamms mittels des Garten- und/oder Forstbearbeitungsgeräts 20 bearbeiten, insbesondere in drei Abschnitte 80-1, 80-2, 80-3 durchtrennen, insbesondere durch Trennschnitte wie in Fig. 3 durch gestrichelte Linien angedeutet. Nach dem Durchtrennen soll jeder der drei Abschnitte 80-1, 80-2, 80-3 eine zuvor mittels einer Aushaltung des Baumstamms 80 ermittelte abschnittsindividuelle Länge L1, L2, L3 aufweisen. Die Längen L1, L2, L3 sind dem Garten- und/oder Forstgerätesystem 10 bekannt und/oder vorgegeben worden.

Zu Beginn steuert der Benutzer 90 mittels des benutzerbetätigbaren Bedienelements 21, dass eine Erfassungssituation des Objekts 80 vorliegt. In anderen Worten: der Benutzer 90 wählt mittels des benutzerbetätigbaren Bedienelements 21 die Objektfunktion OF, insbesondere eine Unter-Objektfunktion Positions- und Längen-Assistenzfunktion, die Erfassungsfunktion EF, insbesondere eine Unter-Erfassungsfunktion Positions- und Längen-Assistenzfunktion, und die Betriebsfunktion BF aus, insbesondere eine Unter-Betriebsfunktion Erfassungs-Assistenzfunktion zum Durchtrennen. Im Detail hält der Benutzer 90 die Smartwatch 74 mit dem Satelliten-Positionsbestimmungsgerät 46 an ein in Fig. 3 rechts Ende des Baumstamms 80 und betätigt beziehungsweise triggert das benutzerbetätigbare Bedienelement 21. Somit wird die Position des rechten Endes erfasst, insbesondere mittels des Satelliten-Positionsbestimmungsgeräts 46, und abgespeichert. Zusätzlich wird das rechte Ende mittels der Kamera 41 erfasst. Anschließend hält der Benutzer 90 die Smartwatch 74 mit dem Satelliten-Positionsbestimmungsgerät 46 an ein in Fig. 3 linkes Ende des Baumstamms 80 und betätigt beziehungsweise triggert das benutzerbetätigbare Bedienelement 21. Somit wird die Position des linken Endes erfasst, insbesondere mittels des Satelliten-Positionsbestimmungsgeräts 46, und abgespeichert. Zusätzlich wird das linke Ende mittels der Kamera 41 erfasst.

Nach dem Erfassen der Enden bewegt sich der Benutzer 90 mit dem Satelliten-Positionsbestimmungsgerät 46 und der Kamera 41 entlang des Baumstamms 60 in Fig. 3 nach rechts. Wenn ein von dem rechten Ende erfasster Abstand der vorgegebenen Länge L1 entspricht, dann gibt die Ausgabeeinrichtung 60 die Assistenzinformation Info aus, insbesondere das Erreichen der Länge L1. In anderen Worten; die Assistenzinformation Info weist die Objektinformation IO, insbesondere eine Unter-Objektinformation Positions- und Längen-Assistenzinformation, und die Betriebsinformation BF auf, insbesondere eine Unter-Betriebsinformation Durchtrenn-Assistenzinformation.

Im gezeigten Ausführungsbeispiel wird die Assistenzinformation Info an den Benutzer 90 durch eine Sprachausgabe und/oder einen Ton durch den Schallerzeuger 62 akustisch ausgegeben. Des Weiteren wird die Assistenzinformation Info durch ein Vibrieren der Vibrationseinrichtung 63 haptisch ausgegeben. Außerdem wird die Assistenzinformation Info durch ein Anzeigen auf der Anzeige 61 des Schutzhelms 71 optisch ausgegeben. Im Detail weist der Schutzhelm 71 ein Visier auf. Die Anzeige 61 ist dazu ausgebildet, die Assistenzinformation Info auf dem Visier des Schutzhelms 71 in einem Sichtfeld des Benutzers 90, insbesondere vor dem Baumstamm 80 an passender Stelle, anzuzeigen beziehungsweise in dieses zu projizieren, insbesondere in Form der gestrichelten Trennlinie. Im Detail sind die Ausgabeeinrichtung 60 beziehungsweise ihre Anzeige 61 und die Erfassungseinrichtung 40 beziehungsweise ihre Kamera 41 zum Zusammenwirken miteinander ausgebildet.

Auf die Assistenzinformation Info hin steuert der Benutzer 90 mittels des benutzerbetätigbaren Bedienelements 21, dass eine Durchtrennsituation des Objekts 80 vorliegt. In anderen Worten: der Benutzer 90 wählt mittels des benutzerbetätigbaren Bedienelements 21, insbesondere zusätzlich, die Erfassungsfunktion EF, insbesondere eine Unter-Erfassungsfunktion Ausrichtungs-Assistenzfunktion, und die Betriebsfunktion BF aus, insbesondere eine Durchtrenn-Assistenzfunktion. Dann durchtrennt der Benutzer 90 den Baumstamm 80 mit der Säge 20. Im Detail trennt er den Abschnitt 80-1 ab.

Während des Durchtrennens wird eine Ausrichtung AS des Garten- und/oder Forstbearbeitungsgeräts 20 mittels des Kompasses 44 erfasst. Basierend auf der Ausrichtung AS wird eine Ausrichtung OR des Objekts 80 erfasst, insbesondere eine Himmelsrichtung.

Weiterhin kann der Benutzer 90 ein neues in Fig. 3 rechtes Ende erfassen mittels Betätigen beziehungsweise Triggern des benutzerbetätigbaren Bedienelements 21, die Länge L2 erfassen und den Baumstamm 80 nach der Länge L2 in die Abschnitte 80-2, 80-3 durchtrennen.

Somit kann der Benutzer 90 unterbrechungslos, insbesondere ohne das Garten- und/oder Forstbearbeitungsgerät 20 aus der Hand legen zu müssen, das Objekt 80 bearbeiten.

Wie die gezeigten und oben erläuterten Ausführungsbeispiele deutlich machen, stellt die Erfindung ein vorteilhaftes Garten- und/oder Forstgerätesystem bereit, das verbesserte Eigenschaften aufweist, insbesondere benutzerfreundlich ist.

## Patentansprüche

1. Garten- und/oder Forstgerätesystem (10), aufweisend:
- ein handgeführtes Garten- und/oder Forstbearbeitungsgerät (20),
- eine Assistenzeinrichtung (30), die getrennt von dem Garten- und/oder Forstbearbeitungsgerät ausgebildet ist und die dazu ausgebildet ist, einen Benutzer (90) beim Betrieb des Garten- und/oder Forstbearbeitungsgeräts zu unterstützen, wobei die Assistenzeinrichtung eine Benutzerschnittstelle (31) aufweist, mittels welcher die Assistenzeinrichtung durch Benutzereingaben steuerbar ist,
- wobei das Garten- und/oder Forstbearbeitungsgerät ein benutzerbetätigbares Bedienelement (21) für Benutzereingaben an die Benutzerschnittstelle aufweist,
- wobei das Garten- und/oder Forstbearbeitungsgerät eine Erfassungseinrichtung (40) aufweist, die zum Erfassen einer Eigenschaft (EG) des Garten- und/oder Forstbearbeitungsgeräts (20) und/oder einer Eigenschaft (EO) eines mittels des Garten- und/oder Forstbearbeitungsgeräts zu bearbeitenden Objekts (80) ausgebildet ist,
- wobei das Erfassen mittels des benutzerbetätigbaren Bedienelements (21) steuerbar ist und
- wobei die Assistenzeinrichtung (30) dazu ausgebildet ist, den Benutzer (90) in Abhängigkeit von der erfassten Eigenschaft zu unterstützen,
- wobei die Erfassungseinrichtung (40) eine Kamera (41) und/oder eine inertiale Messeinheit (42) aufweist,
- wobei das handgeführte Garten- und/oder Forstbearbeitungsgerät (20) einen Handgriff (25) aufweist, **gekennzeichnet dadurch, dass** das benutzerbetätigbare Bedienelement (21) im Bereich des Handgriffs angeordnet ist.

2. Garten- und/oder Forstgerätesystem (10) nach Anspruch 1,
- wobei das handgeführte Garten- und/oder Forstbearbeitungsgerät (20) eine Säge aufweist.

3. Garten- und/oder Forstgerätesystem (10) nach einem der vorhergehenden Ansprüche,
- wobei die Erfassungseinrichtung (40) eine Wasserwaage (43) und/oder einen Kompass (44) und/oder ein lokales Positionsbestimmungsgerät (45) und/oder ein Satelliten-Positionsbestimmungsgerät (46) und/oder einen Schallwandler (47) und/oder einen Entfernungsmesser (48) und/oder einen Drehzahlmesser (49) und/oder ein Thermometer (50) und/oder einen Gerätebetriebssensor (51) aufweist.

4. Garten- und/oder Forstgerätesystem (10) nach einem der vorhergehenden Ansprüche, aufweisend:
- eine Ausgabeeinrichtung (60) aufweist, die zum Ausgeben einer Assistenzinformation (Info) an den Benutzer (90) ausgebildet ist.

5. Garten- und/oder Forstgerätesystem (10) nach Anspruch 4,
- wobei die Ausgabeeinrichtung (60) eine Anzeige (61) und/oder einen Schallerzeuger (62) und/oder eine Vibrationseinrichtung (63) aufweist.

6. Garten- und/oder Forstgerätesystem (10) nach Anspruch 4 oder 5, aufweisend:
- einen Schutzhelm (71), einen Gesichts- und/oder Gehörschutz (72), eine Schutzbrille, einen Schutzhandschuh (73), eine Smartwatch (74), ein Armband, einen Armreif und/oder ein Smartphone (75), an welchem/welcher die Ausgabeeinrichtung (60) angeordnet ist.

7. Garten- und/oder Forstgerätesystem (10) nach einem der vorhergehenden Ansprüche,
- wobei das benutzerbetätigbare Bedienelement (21) einen Dreh- und/oder Drücksteller (22) und/oder ein Touchpad (23) aufweist.

8. Garten- und/oder Forstgerätesystem (10) nach einem der vorhergehenden Ansprüche,
- wobei die Benutzerschnittstelle (31) und das benutzerbetätigbare Bedienelement (21) dazu ausgebildet, kabellos miteinander wechselzuwirken.

9. Garten- und/oder Forstgerätesystem (10) nach einem der vorhergehenden Ansprüche,
- wobei die Assistenzeinrichtung (30) verschiedene Assistenzfunktionen (AF) zum Unterstützen des Benutzers (90) beim Betrieb des Garten- und/oder Forstbearbeitungsgeräts (20) aufweist, und/oder wobei das Garten- und/oder Forstgerätesystem verschiedene Assistenzeinrichtungen aufweisend verschiedene Assistenzfunktionen zum Unterstützen des Benutzers beim Betrieb des Garten- und/oder Forstbearbeitungsgeräts aufweist, und
- wobei das benutzerbetätigbare Bedienelement (21) zum Auswählen einer der Assistenzfunktionen ausgebildet ist, und/oder wobei das Garten- und/oder Forstbearbeitungsgerät verschiedene benutzerbetätigbare Bedienelemente ausgebildet zum Auswählen einer der Assistenzfunktionen aufweist.

10. Garten- und/oder Forstgerätesystem (10) nach Anspruch 9,
- wobei die verschiedenen Assistenzfunktionen (AF) eine Gerätefunktion (GF), eine Objektfunktion (OF), eine Erfassungsfunktion (EF), eine Betriebsfunktion (BF), eine Dokumentationsfunktion (DF), eine Auswertungsfunktion (SF), eine Abrechnungsfunktion (KF), eine Aufzeichnungsfunktion (RF), eine Ausgabefunktion (FF), eine Informationsfunktion (IF), eine Übertragungsfunktion (TF), eine Benutzerfunktion (UF) und/oder eine Hilfsfunktion (HF) aufweisen.

11. Garten- und/oder Forstgerätesystem (10) nach Anspruch 9 oder 10,
- wobei die Assistenzinformation (Info) eine Geräteinformation (IG), eine Objektinformation (IO), eine Erfassungsinformation (IE), eine Betriebsinformation (IB), eine Dokumentationsinformation (ID), eine Auswertungsinformation (IS), eine Abrechnungsinformation (IK), eine Aufzeichnungsinformation (IR), eine Ausgabeinformation (IFF), Übertragungsinformation (IT), eine Benutzerinformation (IU) und/oder eine Hilfsinformation (IH) aufweist.

## Claims

1. A gardening and/or forestry apparatus system (10), having:
- a hand-held gardening and/or forestry processing apparatus (20),
- an assistance device (30), which is formed separately from the gardening and/or forestry processing apparatus and which is designed to support a user (90) in the operation of the gardening and/or forestry processing apparatus, wherein the assistance device has a user interface (31), by means of which the assistance device can be controlled by user inputs,
- wherein the gardening and/or forestry processing apparatus has a user-actuable operator control element (21) for user inputs to the user interface,
- wherein the gardening and/or forestry processing apparatus has a detection device (40), which is designed to detect a property (EG) of the gardening and/or forestry processing apparatus (20) and/or a property (EO) of an object (80) to be processed by means of the gardening and/or forestry processing apparatus,
- wherein the detection can be controlled by means of the user-actuable operator control element (21) and
- wherein the assistance device (30) is designed to support the user (90) depending on the detected property,
- wherein the detection device (40) has a camera (41) and/or an inertial measurement unit (42),
- wherein the hand-held gardening and/or forestry processing apparatus (20) has a handle (25), **characterized in, that** the user-actuable operator control element (21) is arranged in the region of the handle.

2. The gardening and/or forestry apparatus system (10) as claimed in claim 1,
- wherein the hand-held gardening and/or forestry processing apparatus (20) has a saw.

3. The gardening and/or forestry apparatus system (10) as claimed in one of the preceding claims,
- wherein the detection device (40) has a spirit level (43) and/or a compass (44) and/or a local position determination apparatus (45) and/or a satellite position determination apparatus (46) and/or a sound transducer (47) and/or a range finder (48) and/or a tachometer (49) and/or a thermometer (50) and/or an apparatus operating sensor (51).

4. The gardening and/or forestry apparatus system (10) as claimed in one of the preceding claims, having:
- an output device (60), which is designed to output assistance information (Info) to the user (90).

5. The gardening and/or forestry apparatus system (10) as claimed in claim 4,
- wherein the output device (60) has a display (61) and/or a sound generator (62) and/or a vibration device (63).

6. The gardening and/or forestry apparatus system (10) as claimed in claim 4 or 5, having:
- a protective helmet (71), face and/or hearing protection (72), safety glasses, a protective glove (73), a smart watch (74), a bracelet, an armband and/or a smartphone (75), on which the output device (60) is arranged.

7. The gardening and/or forestry apparatus system (10) as claimed in one of the preceding claims,
- wherein the user-actuable operator control element (21) has a rotary and/or push button (22) and/or a touchpad (23).

8. The gardening and/or forestry apparatus system (10) as claimed in one of the preceding claims,
- wherein the user interface (31) and the user-actuable operator control element (21) are designed to interact wirelessly with one another.

9. The gardening and/or forestry apparatus system (10) as claimed in one of the preceding claims,
- wherein the assistance device (30) has various assistance functions (AF) to support the user (90) in the operation of the gardening and/or forestry processing apparatus (20), and/or wherein the gardening and/or forestry apparatus system has various assistance devices having different assistance functions to support the user in the operation of the gardening and/or forestry processing apparatus, and
- wherein the operator control element (21) is designed to select one of the assistance functions, and/or wherein the gardening and/or forestry processing apparatus has various user-actuable operator control elements designed to select one of the assistance functions.

10. The gardening and/or forestry apparatus system (10) as claimed in claim 9,
- wherein the various assistance functions (AF) have an apparatus function (GF), an object function (OF), a detection function (EF), an operating function (BF), a documentation function (DF), an evaluation function (SF), an accounting function (KF), a recording function (RF), an output function (FF), an information function (IF), a transmission function (TF), a user function (UF) and/or an auxiliary function (HF).

11. The gardening and/or forestry apparatus system (10) as claimed in claim 9 or 10,
- wherein the assistance information (Info) has apparatus information (IG), object information (IO), detection information (IE), operating information (IB), documentation information (ID), evaluation information (IS), accounting information (IK), recording information (IR), output information (IFF), transmission information (IT), user information (IU) and/or auxiliary information (IH).

## Revendications

1. Système d'équipement de jardinage et/ou de sylviculture (10), comprenant :
- un équipement de jardinage et/ou de sylviculture (20) à main,
- un dispositif d'assistance (30) qui est conçu séparément de l'équipement de jardinage et/ou de sylviculture et qui est conçu pour assister un utilisateur (90) pendant le fonctionnement de l'équipement de jardinage et/ou de sylviculture, le dispositif d'assistance comportant une interface utilisateur (31) permettant de commander le dispositif d'assistance par des entrées utilisateur,
- l'équipement de jardinage et/ou de sylviculture comportant un élément de commande (21) actionnable par l'utilisateur et destiné à des entrées d'utilisateur au niveau de l'interface utilisateur,
- l'équipement de jardinage et/ou de sylviculture comportant un dispositif de détection (40) qui est conçu pour détecter une propriété (EG) de l'équipement de jardinage et/ou de de sylviculture (20) et/ou une propriété (EO) d'un objet (80) à traiter au moyen de l'équipement de jardinage et/ou de sylviculture,
- la détection étant commandable au moyen de l'élément de commande (21) actionnable par l'utilisateur, et
- le dispositif d'assistance (30) étant conçu de façon à assister l'utilisateur (90) en fonction de la propriété détectée,
- le dispositif de détection (40) comportant une caméra (41) et/ou une unité de mesure inertielle (42),
- l'équipement de jardinage et/ou de de sylviculture (20) à guidage manuel étant muni d'une poignée (25), **caractérisé en ce que** l'élément de commande (21) actionnable par l'utilisateur est agencé dans la zone de la poignée.

2. Système d'équipement de jardinage et/ou de sylviculture (10) selon la revendication 1,
- dans lequel l'équipement de jardinage et/ou de sylviculture (20) à main présente une scie.

3. Système d'équipement de jardinage et/ou de sylviculture (10) selon l'une des revendications précédentes,
- dans lequel le dispositif de détection (40) comprend un niveau à bulle (43) et/ou un compas (44) et/ou un équipement (45) de positionnement local et/ou un équipement (46) de positionnement par satellite et/ou un transducteur acoustique (47) et/ou un télémètre (48) et/ou un tachymètre (49) et/ou un thermomètre (50) et/ou un capteur (51) de fonctionnement d'équipement.

4. Système d'équipement de jardinage et/ou de sylviculture (10) selon l'une des revendications précédentes, comprenant :
- un dispositif de sortie (60) conçu de façon à délivrer une information d'assistance (Info) à l'utilisateur (90).

5. Système d'équipement de jardinage et/ou de sylviculture (10) selon la revendication 4,
- dans lequel le dispositif de sortie (60) comprend un affichage (61) et/ou un générateur acoustique (62) et/ou un dispositif de vibration (63).

6. Système d'équipement de jardinage et/ou de sylviculture (10) selon la revendication 4 ou la revendication 5, comprenant :
- un casque de protection (71), une protection faciale et/ou auditive (72), des lunettes de protection, des gants de protection (73), une montre connectée (74), un brassard, un bracelet rigide et/ou un smartphone (75) sur lesquels/lesquelles est agencé le dispositif de sortie (60).

7. Système d'équipement de jardinage et/ou de sylviculture (10) selon l'une des revendications précédentes,
- dans lequel l'élément de commande (21) actionnable par l'utilisateur comporte un bouton rotatif et/ou un poussoir (22) et/ou un pavé tactile (23).

8. Système d'équipement de jardinage et/ou de sylviculture (10) selon l'une des revendications précédentes,
- dans lequel l'interface utilisateur (31) et l'élément de commande actionnable par l'utilisateur (21) sont conçus de façon à interagir sans fil l'un avec l'autre.

9. Système d'équipement de jardinage et/ou de sylviculture (10) selon l'une des revendications précédentes,
- dans lequel le dispositif d'assistance (30) présente différentes fonctions d'assistance (AF) pour aider l'utilisateur (90) lors de l'utilisation de l'équipement de jardinage et/ou de sylviculture (20), et/ou le système d'équipement de jardinage et/ou de sylviculture présentant différents dispositifs d'assistance avec différentes fonctions d'assistance pour aider l'utilisateur lors de l'utilisation de l'équipement de jardinage et/ou de sylviculture, et
- l'élément de commande (21) actionnable par l'utilisateur est conçu de façon à sélectionner l'une des fonctions d'assistance, et/ou l'équipement de jardinage et/ou de sylviculture comporte différents éléments de commande actionnables par l'utilisateur et conçus de façon à sélectionner l'une des fonctions d'assistance.

10. Système d'équipement de jardinage et/ou de sylviculture (10) selon la revendication 9,
- dans lequel les diverses fonctions d'assistance (AF) comprennent une fonction d'équipement (GF), une fonction d'objet (OF), une fonction de détection (EF), une fonction de fonctionnement (BF), une fonction de documentation (DF), une fonction d'évaluation (SF), une fonction de facturation (KF), une fonction d'enregistrement (RF), une fonction de sortie (FF), une fonction d'information (IF), une fonction de transmission (TF), une fonction d'utilisateur (UF) et/ou une fonction auxiliaire (HF).

11. Système d'équipement de jardinage et/ou de sylviculture (10) selon la revendication 9 ou la revendication 10,
- dans lequel l'information d'assistance (Info) comprend une information d'équipement (IG), une information d'objet (IO), une information de détection (IE), une information de fonctionnement (IB), une information de documentation (ID), une information d'évaluation (IS), une information de facturation (IK), une information d'enregistrement (IR), une information de sortie (IFF), une information de transmission (IT), une information d'utilisateur (IU) et/ou une information auxiliaire (IH).
